# EUROPÄISCHE PATENTANMELDUNG

(11) **EP 1 744 063 A2**
(43) Veröffentlichungstag der Anmeldung: **17.01.2007**
(21) Anmeldenummer: 06011273.7
(22) Anmeldetag: 31.05.2006
(51) Int. Cl.: F16B 5/02

(54) **Toleranzausgleichsanordnung aus Kunststoff**

(30) Priorität: 11.07.2005 DE 202005010873 U
(71) Anmelder: Böllhoff Verbindungstechnik GmbH, 33649 Bielefeld (DE)
(72) Erfinder: Figge, Hans-Ulrich, 33758 Schloss-Holte (DE); Metten, Andreas, 33775 Versmold (DE); Jodeleit, Martin, 33617 Bielefeld (DE)
(74) Vertreter: Wehnert, Werner

(57) **Zusammenfassung**

Die Toleranzausgleichsanordnung besteht aus einer Befestigungsschraube (2), die mindestens einen Mitnehmervorsprung (16) hat, einem Aufnahmeteil (4), das an einem ersten Bauteil (A) festlegbar ist und mit dem die Befestigungsschraube (2) zum Verspannen der Bauteile (A, B) verschraubbar ist, und einer Verstellbuchse (6), die an dem Aufnahmeteil (4) über rampenförmige Gleitflächen (32, 48) abgestützt ist. Die Verstellbuchse (6) hat mindestens einen Mitnehmervorsprung (52), der mit dem Mitnehmervorsprung (16) der Befestigungsschraube (2) so zusammenwirkt, dass die Verstellbuchse (6) beim Einschrauben der Befestigungsschraube 82) in das Aufnahmeteil (4) von der Befestigungsschraube (2) mitschleppt und aufgrund einer entsprechenden Relativbewegung der rampenförmigen Gleitflächen (32, 48) in Anlage mit dem zweiten Bauteil (B) für den Toleranzausgleich bewegt wird.

## Beschreibung

Die vorliegende Erfindung betrifft eine Toleranzausgleichsanordnung zum selbsttätigen Ausgleichen von Toleranzen im Abstand zwischen zwei vormontierten bzw. zu montierenden, miteinander zu verspannenden Bauteilen.

Derartige Toleranzausgleichsanordnungen sind in großer Vielfalt bekannt, siehe beispielsweise EP 0 176 663 B1, DE 42 24 575 C2, DE 101 51 383 A1, DE-GM 201 190012 und DE-GM 203 14 003. Sie dienen dazu, fertigungs- und/oder montagebedingte Toleranzen zwischen den Bauteilen auszugleichen. Zu diesem Zweck haben diese Toleranzausgleichsanordnungen üblicherweise eine Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der zu verspannenden Bauteile anlegt, worauf dann beim Weiterdrehen der Befestigungsschraube und entsprechender Erhöhung des Drehmomentes die Reibschlussverbindung überwunden wird, so dass dann die beiden Bauteile durch die Befestigungsschraube über die Verstellbuchse miteinander verspannt werden können.

Die vorbekannten Toleranzausgleichsanordnungen bestehen üblicherweise entweder insgesamt oder teilweise aus metallischen Teilen, wobei die nicht metallischen Teile z.B. aus einem thermoplastischen Kunststoff bestehen. Diese vorbekannten Toleranzausgleichsanordnungen sind relativ kostenaufwendig und haben im Fall der Verwendung von thermoplastischen Kunststoffen den Nachteil, dass die Verspannung der beiden Bauteile durch die Relaxation des Kunststoffes nachlässt.

Der vorliegenden Erfindung liegt die Aufgabe zugrunde, eine Toleranzausgleichsanordnung zum selbsttätigen Ausgleichen von Toleranzen im Abstand zwischen zwei miteinander zu verspannenden Bauteilen zu schaffen, die kostengünstig herstellbar ist und einen für eine Fertigung aus Kunststoff geeigneten konstruktiven Aufbau hat.

Diese Aufgabe wird durch die im Anspruch 1 definierte Toleranzausgleichsanordnung gelöst.

Die erfindungsgemäß ausgebildete Toleranzausgleichseinrichtung besteht lediglich aus drei Komponenten, und zwar der Befestigungsschraube, dem Aufnahmeteil und der Verstellbuchse. Die Befestigungsschraube und die Verstellbuchse sind jeweils mit einem Mitnehmervorsprung versehen, die formschlüssig zusammenwirken, wodurch ein sicheres Mitschleppen der Verstellbuchse beim Einschrauben der Befestigungsschraube in das Aufnahmeteil erreicht wird.

Vorzugsweise ist vorgesehen, dass die Mitnehmervorsprünge der Befestigungsschraube und der Verstellbuchse elastisch so zusammenwirken, dass sie bei Anlage der Verstellbuchse an dem zweiten Bauteil aneinander vorbeibewegbar sind, um eine Verspannung der beiden Bauteile durch die Befestigungsschraube zu ermöglichen. Dies wird beispielsweise dadurch erreicht, dass der Mitnehmervorsprung der Verstellbuchse an einem elastisch nachgiebigen Abschnitt angeformt ist.

Die Erfindung bietet die Möglichkeit einer "Ganzkunststofflösung", bei der alle drei Komponenten aus Kunststoff bestehen. Die drei Komponenten lassen sich daher in einfacher Weise herstellen, beispielsweise durch Spritzgießen.

Weiter vorteilhafte Ausgestaltungen und Weiterbildungen der Erfindung sind in den Unteransprüchen definiert.

Anhand der Zeichnungen wird ein Ausführungsbeispiel der Erfindung näher erläutert. Es zeigt:
Fig. 1 eine perspektivische Ansicht einer erfindungsgemäß ausgebildeten Toleranzausgleichsanordnung vor dem Einschrauben der Befestigungsschraube;
Fig. 2 eine perspektivische Ansicht einer aus dem Aufnahmeteil und der Verstellbuchse bestehenden Untereinheit der Toleranzausgleichsanordnung in Fig. 1;
Fig. 3 eine perspektivische Ansicht des Aufnahmeteils in den Fign. 1 und 2;
Fig. 4 eine perspektivische Ansicht der Verstellbuchse in den Fign. 1 und 2;
Fig. 5 einen Längsschnitt durch die Toleranzausgleichsanordnung im montierten Zustand beim Verspannen der Bauteile;
Fig. 6 eine Schnittansicht in Blickrichtung der Pfeile VI - VI in Fig. 5;
Fig. 7 eine Ansicht der Einzelheit E der Fig. 6 in vergrößertem Maßstab;
Fig. 8 einen der Fig. 5 entsprechenden Längsschnitt beim Lösen der Verspannung der beiden Bauteile;
Fig. 9 eine Schnittansicht in Blickrichtung der Pfeile IX - IX in Fig. 8;
Fig. 10 eine Ansicht der Einzelheit E in der Fig. 9 in vergrößertem Maßstab.

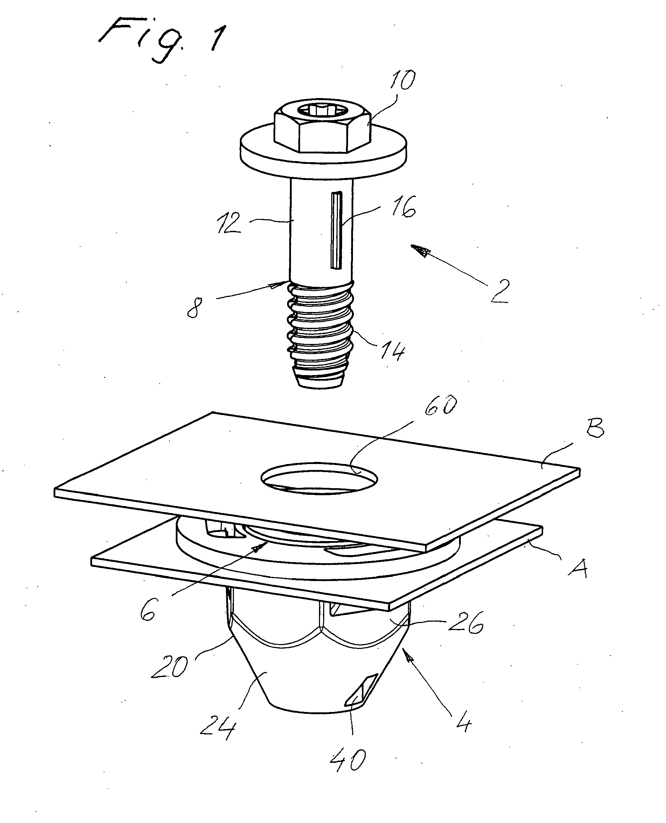

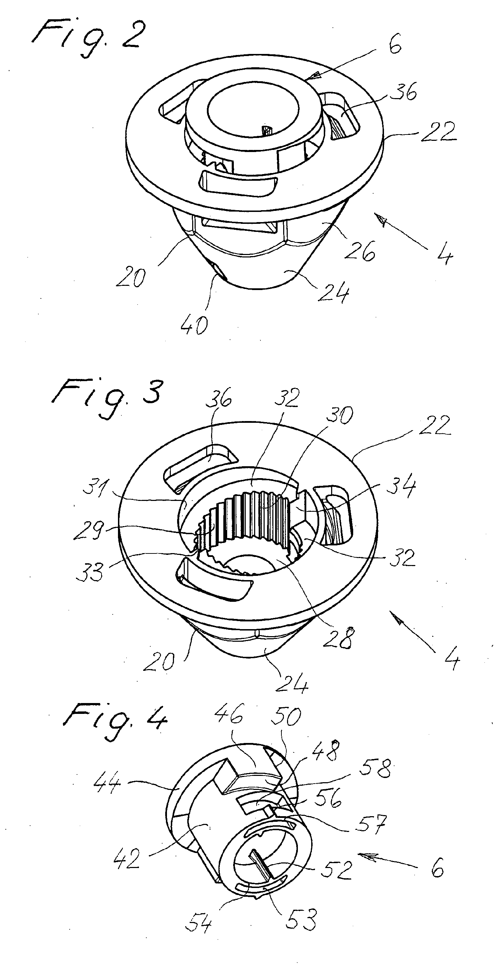

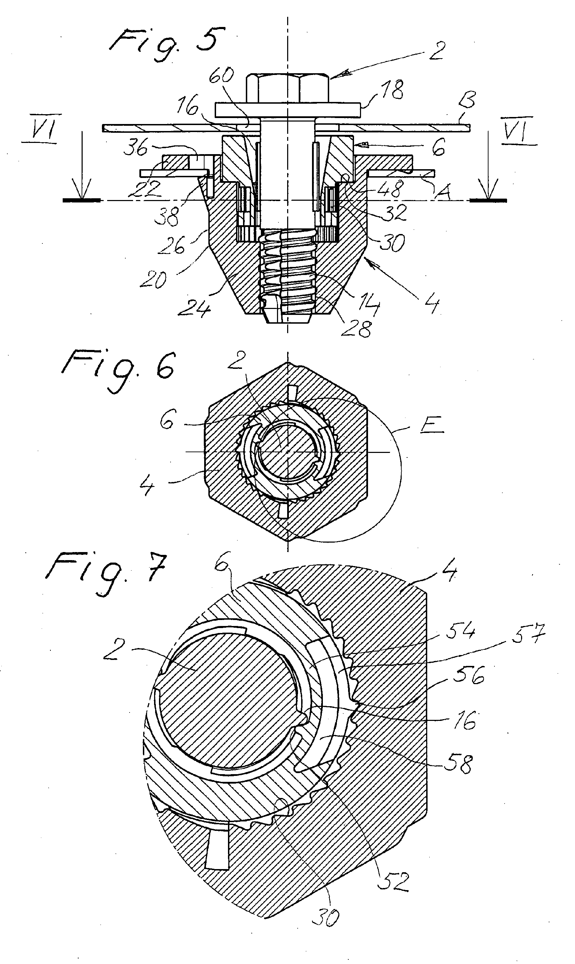

Die in Fig. 1 dargestellte Toleranzausgleichsanordnung dient zum Verspannen zweier Bauteile A, B und gleichzeitigen Toleranzausgleich im Abstand zwischen den beiden Bauteilen A, B. Dieser Abstand unterliegt Schwankungen aufgrund fertigungsbedingter Bauteiltoleranzen und/ oder montagebedingter Toleranzen in der Vor- beziehungsweise Endmontage, welche durch die Toleranzausgleichsanordnung ausgeglichen werden.

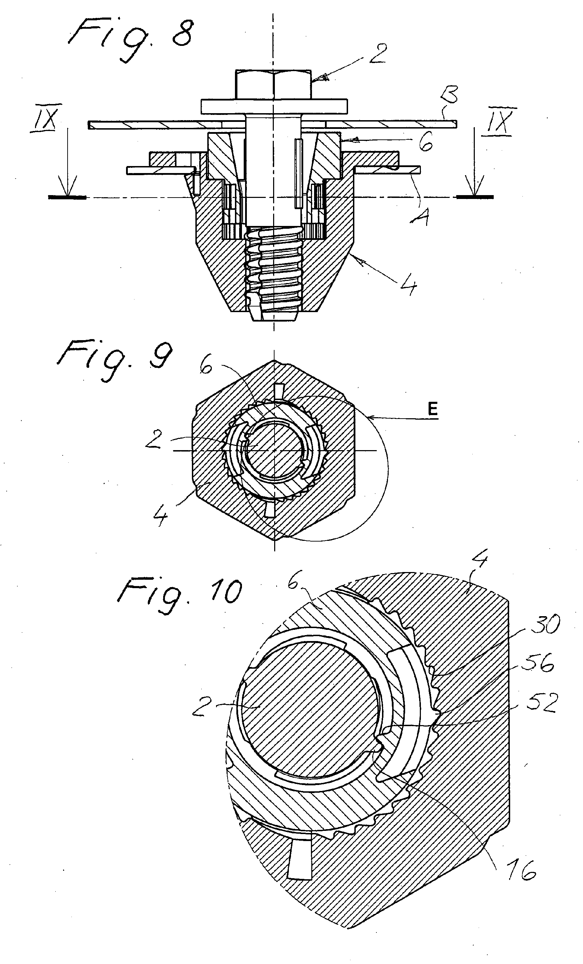

Die Toleranzausgleichsanordnung besteht aus einer Befestigungsschraube 2, einem Aufnahmeteil 4 und einer Verstellbuchse 6. Das Aufnahmeteil 4 und die Verstellbuchse 6 lassen sich zu einer in Fig. 2 dargestellten Untereinheit vormontieren, wie noch genauer erläutert wird.

Die Befestigungsschraube 2 besteht aus einem Schaft 8 und einem Kopf 10. Der Kopf 10 kann als üblicher Schraubenkopf mit entsprechenden Antriebsmerkmalen ausgebildet sein. Der Schaft 8 besteht aus einem im Wesentlichen zylindrischen, glattwandigen Schaftabschnitt 12 und einem Gewindeabschnitt 14. Der Gewindeabschnitt 14 hat im dargestellten Ausführungsbeispiel ein selbstschneidendes und/ oder -formendes Gewinde. Am Gewindeschaft 12 sind zwei diametral gegenüberliegende Mitnehmervorsprünge 16 vorgesehen, die axial über den größten Teil des Gewindeabschnittes 12 verlaufen und deren Zweck im folgenden noch erläutert wird.

Das in Fig. 3 dargestellte Aufnahmeteil 4 ist als Ringkörper 20 ausgebildet, der an seinem oberen axialen Ende mit einem Ringflansch 22 versehen ist. Der Ringkörper 20 hat einen konisch ausgebildeten Einführabschnitt 24 und einen sechseckigen Umfang 26, siehe auch Fig. 2.

Der Ringkörper 20 mit dem Ringflansch 22 hat eine durchgehende Bohrung, die im unteren Bereich als glattwandiger Bohrungsabschnitt 28 ausgebildet ist und zur Aufnahme des Gewindeabschnittes 14 der Befestigungsschraube 2 dient, siehe auch die Fign. 5 und 8. An den Bohrungsabschnitt 28 schließt sich ein erweiterter Bohrungsabschnitt 29 an, der an seiner Innenseite mit zwei diametral gegenüberliegenden, über den Umfang verteilten Verzahnungen 30 versehen ist. An den Bohrungsabschnitt 29 schließt sich ein weiterer Bohrungsabschnitt 31 vergrößerten Durchmessers an. Die Schulter zwischen den beiden Bohrungsabschnitten 29 und 31 wird von zwei in Umfangsrichtung verlaufenden, diametral gegenüberliegenden rampenförmigen Gleitflächen 32 gebildet. Zwischen den beiden rampenförmigen Gleitflächen 32 ist jeweils eine axial verlaufende Anschlagfläche 34 gebildet. An der Stelle der Anschläge 34 ist jeweils ein Anschlag 33 in Form eines radial nach innen ragenden Vorsprungs vorgesehen.

Der Flansch 22 ist mit drei über den Umfang verteilten Durchbrüchen 36 versehen. Im Bereich der Durchbrüche 36 ist jeweils ein Clip 38 (Fign. 5 und 8) zum Festlegen des Aufnahmeteils 4 an dem Bauteil A vorgesehen. Schließlich hat der konische Einführabschnitt 24 zwei diametral gegenüberliegende Ausnehmungen 40, siehe insbesondere Fig. 1.

Die in Fig. 4 dargestellte Verstellbuchse 6 besteht aus einem allgemein zylindrischen Buchsenkörper 42, an dessen einen axialen Ende ein Ringflansch 44 angeformt ist. An der Unterseite des Ringflansches 44 sind zwei diametral gegenüberliegende, axial nach unten ragende Ansätze 46 vorgesehen, die an ihren Unterseiten jeweils mit einer rampenförmigen Gleitfläche 48 versehen sind. An einer Seite der Ansätze 46 ist jeweils eine axial verlaufende Anschlagfläche 50 vorgesehen, die quer zu der zugehörigen rampenförmigen Gleitfläche 48 verläuft.

Der Buchsenkörper 42 hat an seiner Innenseite zwei diametral gegenüberliegende Mitnehmervorsprünge 52, die axial verlaufen und radial nach innen vorstehen. Die Mitnehmervorsprünge 52 sind jeweils an einem federnd nachgebenden Abschnitt 54 angeformt, dessen Nachgiebigkeit durch axial verlaufende Schlitze 53 erzeugt wird.

Die Verstellbuchse 6 ist ferner an ihrer Außenseite mit zwei diametral gegenüberliegenden Rastvorsprüngen 56 versehen, die ebenfalls an einem federnd nachgebenden Abschnitt 57 am einen axialen.Ende der Verstellbuchse 6 angeformt sind. Die Nachgiebigkeit des elastischen Abschnittes 57 wird einer-seits durch den zugehörigen Schlitz 53 und andererseits durch axial angrenzende Durchbrüche 5 8 erzielt.

Die Befestigungsschraube 2, das Aufnahmeteil 4 und die Verstellbuchse 6 bestehen jeweils aus Kunststoff. Vorzugsweise bestehen das Aufnahmeteil 4 und die Verstellbuchse 6 aus einem faserverstärkten Thermoplasten wie zum Beispiel einem schlagzähmodifizierten PA. Die Befestigungsschraube 2 kann ebenfalls aus einem faserverstärkten Thermoplasten bestehen, der jedoch eine höhere Festigkeit hat als der Kunststoff des Aufnahmeteils 4 und der Verstellbuchse 6. Die Befestigungsschraube 2 kann beispielsweise aus einem hochfasergefüllten PPS bestehen.

Es werden nun die Montage und Funktionsweise der Toleranzausgleichsanordnung erläutert:

Zunächst werden das Aufnahmeteil 4 (Fig. 3) und die Verstellbuchse 6 (Fig. 4) zu der in Fig. 2 dargestellten Untereinheit vormontiert. Hierzu wird die Verstellbuchse 6 mit dem kleinen Durchmesser voraus von oben in die Durchgangsbohrung des Aufnahmeteils 4 eingeführt. Liegen die rampenförmigen Gleitflächen 32 und 48 aneinander an, so werden das Aufnahmeteil 4 und die Verstellbuchse 6 durch eine Relativdrehung in eine Ausgangsposition gebracht, in der die Anschlagflächen 34 des Aufnahmeteils 4 und die Anschlagflächen 50 der Verstellbuchse 6 aneinander anliegen. Diese Ausgangsposition wird dadurch gesichert, dass die Rastvorsprünge 56 der Verstellbuchse 6 an Hinterschnitten der Ausnehmungen 40 (Fig. 1) des Aufnahmeteils 4 anliegen. In dieser Ausgangsposition hat die aus dem Aufnahmeteil 4 und der Verstellbuchse 6 bestehende Untereinheit ihre kleinstmögliche axiale Abmessung.

Die Untereinheit 4, 6 wird nun an dem vormontierten Bauteil A festgelegt, indem sie von oben in ein sechseckiges Loch des Bauteils A eingesetzt wird. Wenn der Flansch 22 des Aufnahmeteils 4 an der Oberseite des Bauteils A anliegt, gelangen die federnden Clipse 38 in Anlage mit der Unterseite des Bauteils A, so dass das Aufnahmeteil in axialer Richtung festgelegt ist. Gleichzeitig wird das Aufnahmeteil A mit seinem sechseckigen Umfang 26 in dem sechseckigen Loch des Bauteils A in Umfangsrichtung festgelegt. Hierbei können die bei der Betätigung der Toleranzausgleichseinrichtung auftretenden Drehmomente ohne nachteilige Auswirkung auf die Lage der Toleranzausgleichseinrichtung sicher aufgenommen werden. Das Aufnahmeteil 4 könnte jedoch auch in konstruktiv anderer Weise an dem Bauteil A festgelegt werden.

Wenn nun das Bauteil B in einem bestimmten Abstand zum Bauteil A ebenfalls montiert ist, werden die Bauteile A und B mit Hilfe der Befestigungsschraube 2 miteinander verspannt, wobei gleichzeitig ein Ausgleich von Toleranzen im Abstand zwischen den Bauteilen A und B ausgeglichen wird.

Hierzu wird die Befestigungsschraube 2 durch ein Loch 60 des Bauteils B hindurch - im Uhrzeigersinn der Fig. 7 - in den Bohrungsabschnitt 28 des Aufnahmeteils 4 eingeschraubt (Fign. 5 - 7). Wie bereits erwähnt, ist das Gewinde der Befestigungsschraube 2 als selbstschneidendes und/oder -formendes Gewinde ausgebildet, das in dem glattwandig ausgebildeten Bohrungsabschnitt 28 ein entsprechendes Gegengewinde bildet. Da derartige Kunststoff-in-Kunststoff-Gewindeverbindungen im Stand der Technik bekannt sind, wird hierauf nicht näher eingegangen. Es sei jedoch darauf hingewiesen, dass der Bohrungsabschnitt 28 auch mit einem vorgeformten Aufnahmegewinde versehen sein könnte.

Wenn die Befestigungsschraube 2 um einen vorgegebenen Betrag in das Aufnahmeteil 4 eingeschraubt ist, gelangen die Mitnehmervorsprünge 16 der Befestigungsschraube 2 in den Eingriffbereich der Mitnehmervorsprünge 52 der Verstellbuchse 6. Wird nun die Befestigungsschraube 2 weitergedreht, so schleppt sie die Verstellbuchse 6 mit. Hierbei gleiten die rampenförmigen Gleitflächen 48 der Verstellbuchse 6, die eine kleinere Umfangserstreckung als die rampenförmigen Gleitflächen 32 des Aufnahmeteils 4 haben, an den rampenförmigen Gleitflächen 32 entlang. Die rampenförmigen Gleitflächen 32 und 48 sind entgegengesetzt geneigt zur Gewindesteigung des Gewindeabschnittes 14 der Befestigungsschraube 2. Die Verstellbuchse 6 wird somit aus dem Aufnahmeteil 4 axial nach oben herausgedreht, bis es sich an die Unterseite des Bauteils B anlegt. Der Abstand zwischen den Bauteilen A und B ist nun überbrückt.

Während dieser Drehbewegung bewegen sich Rastvorsprünge 56 der Verstellbuchse 6 an den Zähnen der Verzahnung 30 des Aufnahmeteils 4 entlang (Fig. 7). Dies wird dadurch ermöglicht, dass der Rastvorsprung 56 an dem elastisch nachgebenden Abschnitt 57 angeformt und damit gewissermaßen federnd gelagert ist. Die Verstellbuchse 6 ist hierdurch in der jeweils erreichten Lage gesichert. Im übrigen ist die Verstellbuchse 6 in ihrer maximalen Drehbewegung (1/2 Umdrehung) durch die beiden Anschläge 33 des Aufnahmeteils 4 begrenzt, um zu vermeiden, dass die Verstellbuchse 6 versehentlich in die Ausgangsposition abrutscht.

Wenn nun die Befestigungsschraube 2 weiter eingedreht wird, um die beiden Bauteile A, B miteinander zu verspannen, werden die Mitnehmervorsprünge 52 der Verstellbuchse 6 von den Mitnehmervorsprüngen 16 der Befestigungsschraube 2 "überfahren". Dies wird dadurch ermöglicht, dass die Mitnehmervorsprünge 52 aufgrund des elastischen Abschnittes 32 federnd nachgeben.

Die Befestigungsschraube 2 kann nun weitergedreht werden, bis sich der Flansch 18 der Befestigungsschraube 2 an die Oberseite des Bauteils B anlegt. Zum Verspannen der beiden Bauteile A, B ist kein hohes Anzugsmoment der Befestigungsschraube 2 erforderlich, da die Kunststoff-in-Kunststoff-Gewindeverbindung zwischen der Befestigungsschraube 2 und dem Bohrungsabschnitt 28 des Aufnahmeteils 4 für eine Gewindesicherung sorgt. Wie bereits erwähnt, kann jedoch auch eine andere Gewindeverbindung vorgesehen werden, die mit einer Gewindesicherung beispielsweise in Form eines Gewindesteigungsversatzes, einer Lacknut oder dergleichen versehen ist.

Soll die Verspannung der beiden Bauteile A, B wieder gelöst werden (Fign. 8 - 10), so wird die Befestigungsschraube 2 in der entgegengesetzten Richtung (entgegen dem Uhrzeigersinn in Fig. 10) aus dem Aufnahmeteil 4 herausgedreht. Bei dem dargestellten Ausführungsbeispiel wird hierbei die Verstellbuchse 6 in ihrer Lage gehalten, da die Rastvorsprünge 56 nur in einer Richtung (im Uhrzeigersinn in Fig. 10) an den Zähnen der Verzahnung 30 vorbeibewegt werden können. Soll dagegen die Verstellbuchse 6 von der Befestigungsschraube 2 in ihre Ausgangsposition zurückgedreht werden, so können die Rastvorsprünge 56 und die Verzahnung 30 auch so ausgebildet werden, dass sich die Rastvorsprünge 56 in beiden Drehrichtungen an den Zähnen der Verzahnungen 30 vorbei bewegen lassen.

## Patentansprüche

1. Toleranzausgleichsanordnung zum selbsttätigen Ausgleichen von Toleranzen im Abstand zwischen zwei miteinander zu verspannenden Bauteilen (A, B), bestehend aus
einer Befestigungsschraube (2), die mindestens einen Mitnehmervorsprung (16) hat,
einem Aufnahmeteil (4), das an einem ersten (A) der beiden Bauteile (A, B) festlegbar ist und mit dem die Befestigungsschraube (2) zum Verspannen der Bauteile (A, B) verschraubbar ist, und
einer Verstellbuchse (6), die an dem Aufnahmeteil (4) über rampenförmige Gleitflächen (32, 48) abgestützt ist und die mindestens einen Mitnehmervorsprung (52) hat, der mit dem Mitnehmervorsprung (16) der Befestigungsschraube (2) so zusammenwirkt, dass die Verstellbuchse (6) beim Einschrauben der Befestigungsschraube (2) in das Aufnahmeteil (4) von der Befestigungsschraube (2) mitgeschleppt und aufgrund einer entsprechenden Relativbewegung der rampenförmigen Gleitflächen (32, 48) in Anlage mit dem zweiten Bauteil (B) für den Toleranzausgleich bewegt wird.

2. Toleranzausgleichsanordnung nach Anspruch 1, **dadurch gekennzeichnet, dass** die Mitnehmervorsprünge (16, 52) der Verstellbuchse (6) und der Befestigungsschraube (2) elastisch so zusammenwirken, dass sie bei Anlage der Verstellbuchse (6) an dem zweiten Bauteil (B) aneinander vorbei bewegbar sind, um eine Verspannung der beiden Bauteile (A, B) durch die Befestigungsschraube (2) zu ermöglichen.

3. Toleranzausgleichsanordnung nach Anspruch 2, **dadurch gekennzeichnet, dass** der Mitnehmervorsprung (52) der Verstellbuchse (6) an einem elastisch nachgiebigen Abschnitt (54) angeformt ist.

4. Toleranzausgleichsanordnung nach einem der vorhergehenden Ansprüche, **dadurch gekennzeichnet, dass** die Verstellbuchse (6) allgemein zylindrisch ausgebildet ist und an einem axialen Ende einen Flansch (44) aufweist, an dessen Unterseite Ansätze (46) mit den rampenförmigen Gleitflächen (48) der Verstellbuchse (6) vorgesehen sind.

5. Toleranzausgleichsanordnung nach Anspruch 4, **dadurch gekennzeichnet, dass** die Ansätze (46) der Verstellbuchse (6) quer zu den rampenförmigen Gleitflächen (48) verlaufende Anschlagflächen (50) aufweisen, an denen in einer Ausgangsposition der Toleranzausgleichsanordnung entsprechende Anschlagflächen (34) des Aufnahmeteils (4) anliegen.

6. Toleranzausgleichsanordnung nach Anspruch 5, **dadurch gekennzeichnet, dass** die Ausgangsposition der Toleranzausgleichsanordnung durch eine Verrastung (40, 56) zwischen dem Aufnahmeteil (4) und der Verstellbuchse (6) gesichert ist.

7. Toleranzausgleichsanordnung nach einem der vorhergehenden Ansprüche, **dadurch gekennzeichnet, dass** zwischen dem Aufnahmeteil (4) und der Verstellbuchse (6) eine Rastverzahnung (30, 56) in Form mindestens eines federnden Rastvorsprunges (56) und einer Verzahnung (30) vorgesehen ist, um die Verstellbuchse (6) in ihrer Lage relativ zum Aufnahmeteil(4) zu sichern.

8. Toleranzausgleichsanordnung nach einem der vorhergehenden Ansprüche, **dadurch gekennzeichnet, dass** das Aufnahmeteil (4) Anschläge (33) zur Begrenzung der Bewegung der Verstellbuchse (6) relativ zum Aufnahmeteil (4) hat.

9. Toleranzausgleichsanordnung nach einem der vorhergehenden Ansprüche, **dadurch gekennzeichnet, dass** das Aufnahmeteil (4) als Ringkörper (20) ausgebildet ist, der an einem axialen Ende einen Befestigungsflansch (22) und in einem axial entgegengesetzten Bereich eine Aufnahmebohrung (28) für die Befestigungsschraube (2) aufweist.

10. Toleranzausgleichsanordnung nach Anspruch 9, **dadurch gekennzeichnet, dass** die Befestigungsschraube (2) ein selbstschneidendes und/oder -formendes Gewinde (14) hat, das in die glatt ausgebildete Aufnahmebohrung (28) des Aufnahmeteils (4) einschraubbar ist.

11. Toleranzausgleichsanordnung nach Anspruch 10, **dadurch gekennzeichnet, dass** die Schraubverbindung zwischen der Befestigungsschraube (2) und der Aufnahmebohrung (28) des Aufnahmeteils (4) eine Kunststoff-in-Kunststoff-Gewindeverbindung ist.

12. Toleranzausgleichsanordnung nach einem der vorhergehenden Ansprüche, **dadurch gekennzeichnet, dass** das Aufnahmeteil (4) angeformte Clipse (38) zum Festlegen am ersten Bauteil (A) in axialer Richtung aufweist.

13. Toleranzausgleichsanordnung nach einem der vorhergehenden Ansprüche, **dadurch gekennzeichnet, dass** das Aufnahmeteil (4) einen mehreckigen Umfang (26) zum Festlegen am ersten Bauteil (A) in Umfangsrichtung aufweist.

14. Toleranzausgleichsanordnung nach einem der vorhergehenden Ansprüche, **dadurch gekennzeichnet, dass** die Befestigungsschraube (2), das Aufnahmeteil (4) und die Verstellbuchse (6) sämtlich aus Kunststoff bestehen.

15. Toleranzausgleichsanordnung nach Anspruch 14, **dadurch gekennzeichnet, dass** das Aufnahmeteil (4) und die Verstellbuchse (6) aus einem schlagzähmodifizierten faserverstärkten Thermoplasten, insbesondere Polyamid, bestehen.

16. Toleranzausgleichsanordnung nach Anspruch 14 oder 15, **dadurch gekennzeichnet, dass** die Befestigungsschraube (4) aus einem hochfasergefüllten PPS besteht.
